# EUROPEAN PATENT SPECIFICATION

(11) **EP 0 538 698 B1**
(45) Date of publication and mention of the grant of the patent: **08.01.1997**
(21) Application number: 92117360.5
(22) Date of filing: 10.10.1992
(51) Int. Cl.: G02B 6/44

(54) **Composite power/optical cable**
Zusammengesetztes elektrisches/optisches Leistungskabel
Câble électro/optique à puissance composite

(30) Priority: 24.10.1991 NO 914176
(43) Date of publication of application: 28.04.1993
(73) Proprietor: ALCATEL STK A/S, N-0508 Oslo 5 (NO)
(72) Inventor: Balog, Georg Endre, N-3408 Tranby (NO); Andreassen, Jon Steinar, N-1480 Slattum (NO)
(74) Representative: Pohl, Herbert, Dipl.-Ing

(56) References cited:
- EP-A- 0 143 286
- EP-A- 0 221 243
- EP-A- 0 278 648
- DE-A- 2 635 979
- FR-A- 2 562 272
- US-A- 4 971 420
- PATENT ABSTRACTS OF JAPAN vol. 9, no. 144 (P-365)(1867) 19 June 1985& JP-A-60 024 511

## Description

The present invention relates to a composite cable comprising a single core power cable part and an optical fiber part. The power cable part comprises a central power conductor and one or more layers of insulation material as well as an outer metal screen and corrosion protection.

US Patent No. 4,971,420 (Smith) relates to a composite cable in which the power part is intended for supplying power to repeaters for fiber optic signals. This cable is provided with one or more layers of metal armour wires and the optical fibers are arranged in laser-welded tubes which are substituted for some of the armour wires.

The advantage of arranging the optical fibers in the armour layer instead of making some compartment within the central parts of the power cable is obvious. The armouring process is, however, a time consuming process, and the process of jointing an optical fiber and an encompassing steel tube will make it even more time consuming.

The invention also relates to a method for making a composite cable by means of an armouring machine with rotating cages to produce a composite cable where at least one single-conductor power cable is guided linearly through the machine and where at least one layer of armour elements are helically stranded over the power cable. Such armour machines are commonly known.

Such machines can have several cages each having several reels with armouring elements. The reels are rotated about their own axis for paying out armour elements to a stranding point as the cable is pulled through the machine. The cage is rotated with its reels (e g 6) around the cable so that the elements are stranded around the cable at the stranding point. Some machines have reels with backtwist so that the reels maintain their position in space and the paid off elements are not twisted. This can be done with round elements. When using flat armour elements, the orientation of the reel must follow the rotation of the cage.

Each of the reels are designed to contain a certain volume or length of armour element. When a reel is empty the machine has to be stopped for changing to a full reel, and the element, ends must be jointed.

It is of course a requirement that the armour machine should have as few and short stops as possible. It is, however, still a fact that it takes considerably longer time to make a fiber optic joint than to joint an armour element. When making a cable in accordance with the above mentioned US Patent No 4,971,420, the armouring process will be substantially delayed each time a reel with optical fiber is to be changed and the fiber jointed.

The object of the present invention is to improve composite cables of the mentioned type and reduce the armour wire jointing time.

The features of the invention are defined in the claims. With this invention the factory jointing and manufacturing time is substantially reduced.

This is obtained by using a fiber tube with smaller diameter than the armour elements, and by dividing the fiber part of the cable into two or three subparts which may be arranged on individual reels in the armouring machine. The reel containing the fiber tube (and the reels containing the other subpart(s)) can therefore have a larger length of fiber than the length of armour elements on the other reels, so that it takes longer time between each time a fiber element reel has to be changed.

Above mentioned and other features and objects of the present invention will clearly appear from the following detailed description of embodiments of the invention taken in conjunction with the drawings, where
Figure 1-4 show four examples of a fiber optic assembly,
Figure 5 schematically illustrates a manufacturing process for arranging the fiber optic part within the composite cable armour, and
Figures 6-7 show crossections of Figure 5.

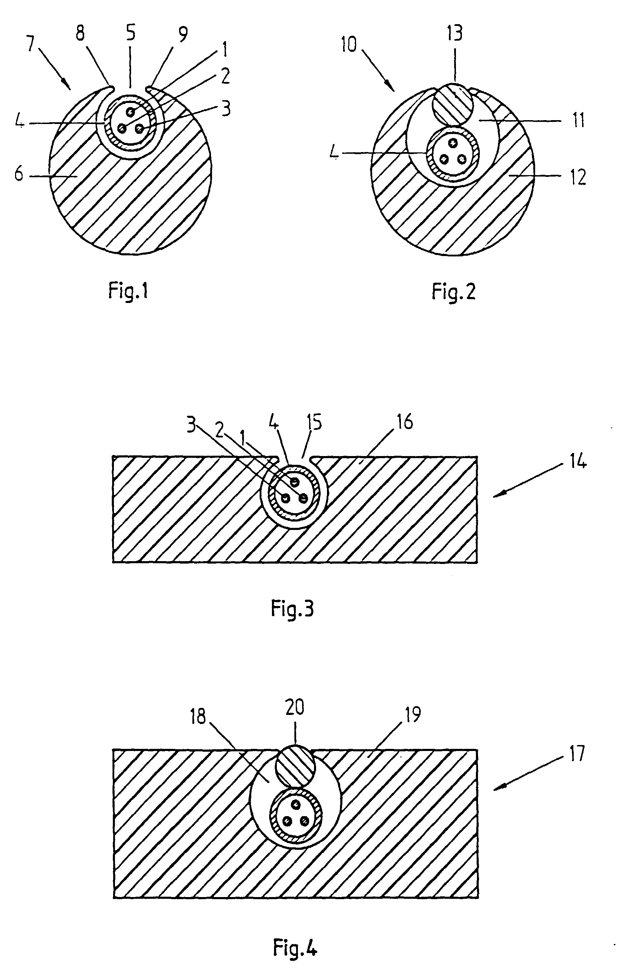

In Figure 1 is illustrated that three optical fibers 1,2,3 are encapsuled within a laser welded steel tube 4. The tube is inserted into a slot 5 in a circular insulation element or cover 6 to make up an assembly 7. The element 6 should be made of a material, such as polyethylene or polypropylene which is flexible and still rigid enough to partly encapsule the tube 4 and be compatible with the rigidness of conventional armour elements. The edges 8 and 9 of the slot 5 should be formed so as to maintain the tube within the slot during all practical handling. The tube 4 will typically have a diameter of 1-2 mm, and the diameter of the element 6 could be 4-7 mm.

In Figure 2 is illustrated an alternative assembly 10 where a somewhat differently formed slot 11 in an element 12 is closed with a string like element 13 riding on the tube 4. The string 13 could be made of the same material as the element 12 and have a diameter of 1-2 mm. The slot 11 should be formed such that neither the tube 4 nor the string 13 would leave the slot during normal handling of the assembly.

In Figures 1 and 2 are shown substantially circular assemblies 7 and 10 to be compatible with similarly dimensioned armour wires, whereas in Figures 3 and 4 there are schematically illustrated rectangular assemblies 14 and 17 corresponding in crossection to the armour elements they are intended to substitute.

In Figure 3 the optical fibers 1,2,3 encapsuled within the tube 4 is inserted into a slot 15 in a rectangular insulation element or cover 16. In Figure 4 which shows an alternative rectangular assembly 17 a differently shaped slot 18 in an element 19 is closed with a string like element 20. The flexible properties of the elements 16 and 19 should be similar to those of the elements 6 and 12. Typical dimensions of the elements 16 and 19 are (1.5-4)x(4-12) mm.

In Figure 5 there are schematically illustrated two reels 30 and 31 for conventional armour wire 32, 33 corresponding in crossection to one of the assemblies 7,10,14,17 described and shown in connection with Figures 1-4 respectively. These armour elements 32,33 are guided to a stranding position (not shown) to the right of the drawing. In order to supply one or more assemblies 7,10,14,17 to the same stranding position, there are for each assembly provided at least two reels 34 and 35. The reel 34 contains the insulation element 6 or 12 or 16 or 19, whereas the reel 35 contains the metal tube assembly 1-4. A third reel 36 may be provided for supplying the string like element 13 or 20 to close the slots 11 or 18.

Guiding pulleys 37 and 38 are provided to make a complete fiber optic element assembly 39 corresponding in crossection to the armour elements 32 and 33. The assembly 39 is guided to the same stranding position (not shown) as the elements 32 and 33.

When splitting up the fiber optical parts which are incorporated in the armour layer of a single core power cable, as shown, the length and time between each fiber optic joint can be considerably extended compared to what would be necessary if the assembly 39 was wound onto one reel in the armouring machine.

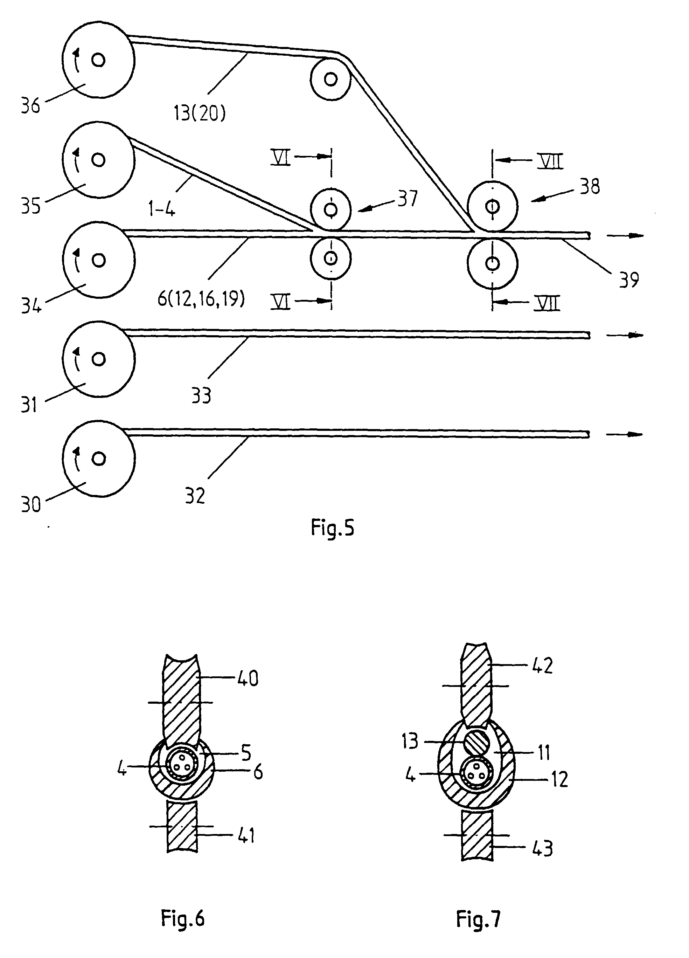

Figure 6 is a crossection through the pulley arrangement 37, taken along line VI-VI in Figure 5, showing an upper pulley 40 which is formed so as to open the element while pressing the tube 4 into the slot 5. The element 6 rests on a lower pulley 41. Similarly there is in Figure 7 shown a crossection of the second pulley arrangement 38 taken through the line VII-VII in Figure 5. The string 13 is pressed into the slot 11 of the element 12 to lock the tube 4 into the slot, by means of two pulleys 42 and 43.

The steel tube 4 can contain one or more optical fibers and even fiber ribbons. The slots 5 and 15 can be formed with a narrow aperture such that there will be no need for the closing strings 13 and 20 shown in Figures 2 and 4. The pulley arrangements can be provided with an additional pulley (not shown)to open the narrow slot in front of the pulley arrangements 37 and 38.

## Claims

1. Composite cable including a single core power cable and at least one surrounding layer of armour elements (32, 33), at least one of said armour elements being substituted with a metal tube (4) containing at least one optical fiber (1,2,3),
**characterized in that** the at least one metal tube (4) has cross-sectional dimensions smaller than those of an armour element and that it is enclosed within a cover (6; 12; 16; 19) of insulation material, wherein said insulation cover (6; 12; 16; 19) is given a crossection and form which substantially corresponds to the crossection and form of the neighbouring armour elements (32, 33).

2. Cable according to claim 1,
characterized in that the insulation cover (6; 12; 16; 19) is constituted by a U-shaped insulation element defining a slot (5; 11; 15; 18) into which the metal tube (4) is inserted.

3. Cable according to claim 2,
characterized in that the slot (11; 18) of the U-shaped cover (12; 19) is closed with a string like element (13; 20) also inserted into the slot.

4. Method for making a composite cable according to claim 2, comprising
arranging on separate reels (34, 35) in an armouring machine a metal tube (4) containing at least one optical fibre (1 - 3) and a U-shaped insulation cover (6; 12; 16; 19) defining a slot (5; 11; 15; 18), paying out from said separate reels said metal tube containing said at least one optical fibre and said U-shaped insulation cover and inserting said paid out metal tube in the slot of said paid out U-shaped insulation cover,
guiding the thus obtained optical fiber assembly (1 - 4/ 6; 12, 13; 16; 19, 20) to a stranding position, together with a single core power cable and a plurality of conventional armour elements (32, 33), and stranding said optical fiber assembly and said armour elements around said single core power cable.

5. Method for making a composite cable according to claim 3, comprising
arranging on separate reels (34, 35, 36) in an armouring machine a metal tube (4) containing at least one optical fibre (1 - 3), a U-shaped insulation cover (12, 19) defining a slot (11, 18) and a string like element (13, 20),
paying out from said separate reels said metal tube containing said at least one optical fibre, said U-shaped insulation cover and said string like element and inserting said paid out metal tube and said string-like element in the slot of said paid out U-shaped insulation cover,
guiding the thus obtained optical fiber assembly (1 - 4/ 12, 13; 19, 20) to a stranding position, together with a single core power cable and a plurality of conventional armour elements (32, 33), and stranding said optical fiber assembly and said armour elements around said single core power cable.

6. Method according to claims 4 or 5,
characterized in that the optical fiber assembly (1 - 4/ 6; 12, 13; 16; 19, 20) is assembled by means of pulley arrangement (37, 38) in the armouring machine before being guided to the stranding point together with the single core power cable and the conventional armouring elements (32, 33).

## Patentansprüche

1. Kompositkabel, das eine einzelne Starkstromkabelseele und wenigstens eine umhüllende Lage eines Ummantelungselements (32, 33) besitzt, wobei wenigstens eines der Ummantelungselemente durch ein Metallrohr (4) ersetzt wurde, das wenigstens einen Lichtwellenleiter enthält (1, 3, 3),
dadurch gekennzeichnet, daß wenigstens ein Metallrohr (4) Durchmesserabmessungen besitzt, die kleiner als die eines Ummantelungselementes sind und das es in einer Hülle (6; 12; 16; 19) aus isolierendem Material eingeschlossen ist, wobei der isolierenden Hülle (6; 12; 16; 19) ein Durchmesser und eine Form gegeben wurde, die im wesentlichen mit dem Querschnitt und Form der benachbarten Umhüllungselemente (32, 33) übereinstimmt.

2. Kabel gemäß Anspruch 1,
dadurch gekennzeichnet, daß die isolierende Hülle (6; 12; 16; 19) von einem U-förmigen Isolationselement gebildet wird, das einen Schlitz (5; 11; 15; 18) festlegt, in den das Metallrohr (4) eingeschoben wird.

3. Kabel gemäß Anspruch 2,
dadurch gekennzeichnet, daß der Schlitz (11; 18) der U-förmigen Hülle (12; 19), der mit einem fadenähnlichen Element (13; 20) geschlossen wurde, das ebenfalls in den Schlitz eingeschoben wird.

4. Verfahren zur Herstellung eines Kompositkabels gemäß Anspruch 2, das folgendes umfaßt:
Anordnen eines Metallrohrs (4), das wenigstens einen Lichtwellenleiter (1 bis 3) und eine U-förmigen Isolationshülle (6; 12; 16; 19), die einen Schlitz (5; 11; 15; 18) definiert, enthält auf getrennte Trommeln (34, 35) in einer Ummantelungsmaschine,
Abwickeln des Metallrohres, das den mindestens einen Lichtwellenleiter und die U-förmige Isolationshülle enthält von den getrennten Trommeln und Einschieben des abgewickelten Metallrohres in den Schlitz der abgewickelten U-förmigen Isolationshülle,
Führen des so erhaltenen Lichtwellenleiteraufbaus (1 bis 4/ 6; 12, 13; 16; 19, 20) gemeinsam mit einer einzelnen Starkstromkabelseele und einer Vielzahl konventioneller Ummantelungselemente (32, 33) zu einer Verseilungsposition und verseilen des Lichtwellenleiteraufbaus und der Ummantelungselemente um die einzelne Starkstromkabelseele.

5. Verfahren zur Herstellung eines Kompositkabels gemäß Anspruch 3, das folgendes umfaßt:
Anordnen eines Metallrohres (4) mit dem wenigstens einem Lichtwellenleiter (1 bis 3), einer U-förmigen Isolationshülle (12, 19), die einen Schlitz (11, 18) festlegt, und eines fadenähnlichen Elementes (13, 20) auf getrennte Trommeln in einer Ummantelungsmaschine,
Abwickeln des Metallrohres, das den wenigstens einen Lichtwellenleiter enthält, der U-förmigen Isolationshülle und des fadenähnlichen Elements von den getrennten Trommeln und einschieben des abgewickelten Metallrohres und des fadenförmigen Elementes in den Schlitz der U-förmigen Isolationshülle,
Führen des so erhaltenen Lichtwellenleiteraufbaus (1 bis 4/ 12, 13; 19, 20) gemeinsam mit einer einzelnen Starkstromkabelseele und einer Vielzahl konventioneller Ummantelungselemente (32, 33) zu einer Verseilungsposition, und verseilen des Lichtwellenleiteraufbaus und der Ummantelungselemente um die einzelne Starkstromkabelseele.

6. Verfahren gemäß den Ansprüchen 4 oder 5,
dadurch gekennzeichnet, daß der Lichtwellenleiteraufbau (1 bis 4/ 6; 12, 13; 16; 19, 20) mit Hilfe einer Rollenanordnung (37, 38) in der Ummmantelungsmaschine zusammengesetzt wurde, bevor er gemeinsam mit der einzelnen Starkstromkabelseele und den konventionellen Ummantelungselementen (32, 33) zu dem Verseilungspunkt geführt wird.

## Revendications

1. Câble composite comportant un câble électrique à une seule âme et au moins une couche d'éléments de blindage (32, 33) qui l'entourent, au moins l'un desdits éléments de blindage étant remplacé par un tube métallique (4) contenant au moins une fibre optique (1, 2, 3), caractérisé en ce que le au moins un tube métallique (4) présente des dimensions de coupe transversale inférieures à celles d'un élément de blindage et en ce qu'il est contenu dans une gaine (6 ; 12 ; 16 ; 19) de matériau isolant, dans lequel ladite gaine isolante (6 ; 12 ; 16 ; 19) présente une coupe transversale et une forme qui correspondent sensiblement à la section transversale et à la forme des éléments de blindage (32, 33) avoisinants.

2. Câble selon la revendication 1, caractérisé en ce que la gaine isolante (6 ; 12 ; 16 ; 19) est composée d'un élément isolant en forme de U définissant une rainure (5 ; 11 ; 15 ; 18) dans laquelle le tube métallique (4) est inséré.

3. Câble selon la revendication 2, caractérisé en ce que la rainure (11 ; 18) de la gaine en forme de U (12 ; 19) est fermée par un élément ressemblant à un ressort (13 ; 20) également inséré dans la rainure.

4. Procédé permettant de fabriquer un câble composite selon la revendication 2, comprenant la disposition, sur des bobines séparées (34, 35), dans une machine de blindage, d'un tube métallique (4) contenant au moins une fibre optique (1-3) et d'une gaine isolante en forme de U (6 ; 12 ; 16 ; 19) définissant une rainure (5 ; 11 ; 15 ; 18), le déroulement du tube métallique, contenant ladite au moins une fibre optique et ladite gaine isolante en forme de U, des bobines séparées, et l'insertion dudit tube métallique déroulé dans la rainure de ladite gaine isolante en forme de U déroulée, le guidage de l'assemblage de fibres optiques ainsi obtenu (1-4/6 ; 12, 13 ; 16 ; 19, 20) vers une position de brin, avec un câble électrique à une seule âme et une pluralité d'éléments de blindage classiques (32, 33), et la mise en brin dudit assemblage de fibres optiques et desdits éléments de blindage autour dudit câble électrique à une seule âme.

5. Procédé permettant de fabriquer un câble composite selon la revendication 3, comprenant la disposition, sur des bobines séparées (34, 35, 36), dans une machine de blindage, d'un tube métallique (4) contenant au moins une fibre optique (1-3), d'une gaine isolante en forme de U (12, 19) définissant une rainure (11, 18) et d'un élément ressemblant à un ressort (13, 20), le déroulement du tube métallique, contenant ladite au moins une fibre optique, ladite gaine isolante en forme de U et ledit élément ressemblant à un ressort, des bobines séparées, et l'insertion dudit tube métallique déroulé et dudit élément ressemblant à un ressort dans la rainure de ladite gaine isolante en forme de U déroulée, le guidage de l'assemblage de fibres optiques ainsi obtenu (1-4/6 ; 12, 13 ; 19, 20) vers une position de brin, avec un câble électrique à une seule âme et une pluralité d'éléments de blindage classiques (32, 33), et la mise en brin dudit assemblage de fibres optiques et desdits éléments de blindage autour dudit câble électrique à une seule âme.

6. Procédé selon les revendications 4 ou 5, caractérisé en ce que l'assemblage de fibres optiques (1-4/6 ; 12, 13 ; 16 ; 19, 20) est assemblé au moyen d'un arrangement de poulies (37, 38) dans la machine de blindage avant d'être guidé vers le point de brin avec le câble électrique à une seule âme et les éléments de blindage classiques (32, 33).
